# EUROPEAN PATENT APPLICATION

(11) **EP 1 830 135 A1**
(43) Date of publication of application: **05.09.2007**
(21) Application number: 06390001.3
(22) Date of filing: 03.03.2006
(51) Int. Cl.: F24F 5/00

(54) **A method and a system for conditioning a building**

(71) Applicant: Marvill Limited, 8011 Paphos (CY)
(72) Inventor: van de Graaf, Marinus Antonius, 8011 Paphos (CY)

(57) **Abstract**

The present invention relates to a method and system for conditioning a building (1), especially a domestic building, by introducing outside air into said building, which outside air is cooled or heated via a pipe (2) buried underground, said outside air is introduced directly into said building without using equipment (except said buried pipe) having heat exchanging activity and in that the pipe (2) buried underground has a length of more than 15 meters and is buried at a depth of 1 - 10 meters, wherein the circulation of air is provided by means of one or more ventilators (3).

## Description

The present invention relates to a method for conditioning a building, especially a domestic building, by introducing outside air into said building, which outside air is cooled or heated via an pipe buried underground. The invention furthermore relates to a system for conditioning a building.

EP 1 376 020.A1 (published on January 2, 2004) describes maintaining a domestic building on the desired temperature by means of outside air by introducing outside air into the domestic building and out of the domestic building. The outside air is supplied to a heat exchanger, in which heat exchanger exchange of heat takes place using a medium being cooled or heated by means of geothermal energy. Preferably a liquid, especially ground-water. is used as medium, which is being passed through the heat exchanger and which is being heated or cooled by means of geothermal energy. The system and the method according to the present invention has improved because the heat exchanger is not being use neither is a closed circuit containing a medium, such as a liquid or ground-water. By elimination of the heat exchanger (denoted by 3 in EP 1 376 020 A1) it is necessary to take other measures to obtain or maintain the desired temperature in the building. The present invention is based on this aspect.

Another system using geothermal energy is known from US patent no. 6.293,120 (September 25, 2001). According to this US patent no heat exchanger is used; instead of that a cobble stone layer having a height within the ranch of from approximately 0.25 m to approximately 1 m is provided under the building, wherein the air for conditioning is passed through the cobble stone layer to be subsequently introduced into the rooms of the building.

UK Patent no. 2,131,944 (1982) describes the use of a heat pomp for recovering heat from pipes buried underground to heat of cool domestic buildings.

The existing systems and methods have now been improved by the present invention. The method according to the invention as mentioned in the preamble is characterized in that said outside air is introduced directly into said building without using equipment (except said buried pipe) having heat exchanging activity and in that the pipe buried underground has a length of more than 15 meters and is buried at a depth of 1-10 meters, wherein the circulation of air is provided by means of at least one ventilator.

The systems for conditioning a building, especially domestic building, as mentioned in the preamble is characterized according to the present ;invention in that said outside air is introduced directly into the building without equipment (except said buried pipe) having heat exchanging activity being present between the point of supply of outside air and between the point of entry into the building and in that the pipe buried underground has a length of more than 15 meters and is buried at a depth of 1-10 meters, wherein the circulation of air is provided by means of at least one ventilator.

The present invention is illustrated in more detail in the following description referring to the appended drawing, wherein:
Fig. 1 is a schematic representation of the connecting pipe 11 between the building to be conditioned and the supply of air,
Fig. 2 represents a comparable system to that of fig. 1, wherein the pipe is buried around the building, and
Fig. 3 represents an alternative for the system in fig. 1, wherein the pipe is buried under the building.

According to a preferred embodiment of the system the pipe is buried at a depth of 1.5-4 meters having a length of 25-75 meters. It will be understood that when a pipe is buried deeper in the ground, the temperature of the ground will be more constant so that the pipe can be shorter.

A minimal depth that 1s necessary to control the temperature in the building. Otherwise, burying the pipe deeper than 4 meters especially deeper than 10 meters, is no longer efficient since the changes in the temperature of the ground are so minimal that it does not weight up to the costs for the placing of the deeper buried pipe.

The pipe itself should be manufactured from a non-heat insulating material and it is therefore, preferred to use a metal pipe or a pipe of a heat conductive plastic. As a plastic PVC is particular preferred since it is a heat conductive plastic, which is relatively cheap.

In order to be able to use the fresh air supplied to the building in an optimal way inside the buildings especially a domestic building, the fresh supplied air is at first supplied to livings and/or sleeping rooms and subsequently to bath rooms(s) or a lavatory. In order to further prevent contamination of the supplied air, by insects and the like, the supply of the air is provided with a filter. It further is preferred that the supply of air is positioned on a shadow rich place and on a height and location that is such that a minimal amount of contaminations are being entrained.

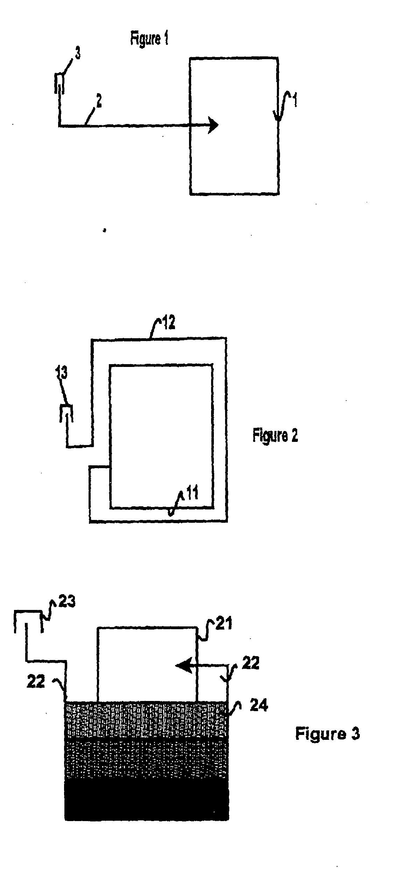

In fig. 1 the building {I} is to be ventilated and maintained at the desired temperature, 2 denotes the pipe which can be burred under the garden according to fig. 1 of the building to which the garden belongs and ventilator (3) is provided with an air filter presented on the place where the air is being let in.

When the building 11 according to fig. 2 has no or a small garden, it is possible to supply the pipe 12 around the building 11, wherein the inlet 13 of the air is positioned relatively close to the building 11. According to another embodiment of the system, the pipe 22 can be buried under the building 21 as shown in fig. 3. Thereby it is of importance that the pipe is not placed under the foundations, since it would be hard to reach.

With this system according to the present invention it is not necessary to install an air conditioning system and the building can be supplied with fresh air in both summer and winter, while the building is maintained at a desired temperature, while keeping the windows and doors closed.

With this system it is possible to cool the total building in Cyprus in the summer time until approximately 25 °C, while the temperature in the winter time can be maintained at approximately 20 °C, whereby it is possible to heat the air in the building in the winter. In an average domestic building an air supply of approximately 350 m3 per hour is sufficient.

Furthermore it can be useful from a practical point of view to provide the pipe with a condensation well 11 before the air is introduced into the domestic building. Via the condensation well, the entrained moisture, which condensates, can be disposed off. Depending on the nature of the material for manufacturing the pipe, the diameter will be approximately 15 cm. It is preferred by the burying the pipe, to compact the ground around the pipe, in order to ensure a good heath exchange of the ground through the pipe.

## Claims

1. A method for conditioning a building, especially a domestic Building, by introducing outside air into said building, which outside air is cooled or heated via a pipe buried underground, **characterized in that** said outside air is introduced directly into said building without using equipment (expet said buried pipe) having heat exchanging activity and **in that** the pipe buried underground has a length of more than 15 meters and is buried at a depth of 1-10 meters, wherein the circulation of air is provided by means of at least one ventilator.

2. A system for conditioning a building, especially a domestic building, by introducing outside air into said building, which outside air can be cooled or heated via an pipe buried underground, **characterized in that** said outside air is introduced directrly into the building without equipment (except said buried pipe) having heat exchanging activity being present between the point of supply of outside air and between the point of entry into the building and **in that** the pipe buried underground has a length of more than 15 meters and is buried at a depth of 1 -10 meters, wherein the circulation of air is provided by means of at least one ventilator.

3. The system according to claim 2, **characterized in** said pipe having a length of 25-75 meters and being buried at a depth of 1.5-4 meters.

4. The system according to any of claims 2 - 3, **characterized in that** said pipe is buried in the garden or the like, belonging to said building, or is buried around said building or under said building.

5. The system according to any of claims 2-4, **characterized in that** said pipe is manufactured from a heat conducting material, such as a metal of a heat conducting plastic.

6. The system according to claim 5, **characterized in that** said pipe is manufactured from PVC.

7. The system according to any of claims 2-6, **characterized in that** the rooms of said building are provided with at least one ventilator, wherein the fresh outside air brought to room temperature is first introduced into the living and sleeping rooms and subsequently into the bathroom or lavatory.

8. The system according to any of claims 2-7, **characterized in that** the supply of outside air into said pipe takes place via a filter.
